# EUROPÄISCHE PATENTSCHRIFT

(11) **EP 3 698 055 B1**
(45) Veröffentlichungstag und Bekanntmachung des Hinweises auf die Patenterteilung: **17.04.2024**
(21) Anmeldenummer: 18782002.2
(22) Anmeldetag: 26.09.2018
(51) Int. Cl.: F16B 5/02, F16B 37/04, F16B 43/00

(54) **TOLERANZAUSGLEICHSANORDNUNG**
TOLERANCE COMPENSATION ASSEMBLY
ENSEMBLE DE COMPENSATION DE TOLÉRANCES

(30) Priorität: 19.10.2017 DE 102017124470
(43) Veröffentlichungstag der Anmeldung: 26.08.2020
(73) Patentinhaber: Böllhoff Verbindungstechnik GmbH, 33649 Bielefeld (DE)
(72) Erfinder: FIGGE, Hans-Ulrich, 33758 Schloss Holte-Stukenbrock (DE)
(74) Vertreter: HWP Intellectual Property
(86) Internationale Anmeldenummer: PCT/EP2018/076077
(87) Internationale Veröffentlichungsnummer: WO 2019/076595

(56) Entgegenhaltungen:
- WO-A1-2010/022841
- DE-A1-102007 037 242
- DE-U1-202005 016 823
- DE-U1-202012 102 440

## Beschreibung

### 1. Gebiet der Erfindung

Die vorliegende Erfindung betrifft eine Toleranzausgleichsanordnung zum Befestigen eines ersten Bauteils an einem zweiten Bauteil mit selbsttätigem Ausgleich von Toleranzen im Abstand zwischen dem ersten und dem zweiten Bauteil. Ebenso betrifft die vorliegende Erfindung ein erstes Bauteil in Kombination mit einer Toleranzausgleichsanordnung, ein erstes und ein zweites Bauteil, die über eine Toleranzausgleichsanordnung mittels einer Schraube aneinander befestigt sind, sowie ein Herstellungsverfahren einer Toleranzausgleichsanordnung.

### 2. Hintergrund der Erfindung

Toleranzausgleichsanordnungen sind in großer Vielfalt bekannt. Sie bestehen üblicherweise aus einer Verstellbuchse mit einem sogenannten Mitschleppabschnitt, der mit einer Befestigungsschraube eine Reibschlussverbindung eingehen kann. Beim Drehen der Befestigungsschraube wird daher die Verstellbuchse mitgedreht, bis sie sich an eines der beiden Bauteile anlegt, worauf dann beim Weiterdrehen der Befestigungsschraube und entsprechender Erhöhung des Drehmoments die Reibschlussverbindung überwunden wird, sodass dann die beiden Bauteile durch die Befestigungsschraube über die Verstellbuchse miteinander verspannt werden können.

Die DE 20 2012 102 440 U1 beschreibt ein Toleranzausgleichselement mit mindestens zwei Stützkörpern, die derart miteinander in Gewindeeingriff stehen, dass das Axialmaß des Toleranzausgleichselements durch relative Verdrehung der Stützkörper verstellbar ist. Mindestens einer der Stützkörper weist eine Schraubenfeder auf, die aus einem Draht mit nicht rechteckigem Querschnitt gewickelt ist und das Gewinde dieses Stützkörpers bildet. Das Toleranzausgleichselement wird mittels Klauen in einem Bauteil gehalten, das eine Gewindebohrung zum Eingriff mit einer Befestigungsschraube aufweist.

Ein weiteres Toleranzausgleichselement ist in DE 10 2012 110 352 A1 beschrieben. Dieses Toleranzausgleichselement umfasst mindestens zwei Stützkörper, von denen mindestens einer eine schraubenförmig verlaufende Stützfläche aufweist, über die sich die Stützkörper so aneinander abstützen, dass das Axialmaß des Toleranzausgleichselements durch relative Verdrehung der Stützkörper verstellbar ist. Mindestens einer der Stützkörper ist eine Schraubenfeder und der sich daran abstützende Stützkörper weist einen Steg auf, der zwischen die Windungen der Schraubenfeder greift. Auch hier ist das Toleranzausgleichselement mittels Klauen in dem Bauteil befestigt, wobei das Bauteil eine Gewindebohrung zum Eingriff mit einer Befestigungsschraube aufweist.

DE 10 2013 216 716 A1 beschreibt eine weitere Toleranzausgleichsvorrichtung. Hier umfasst die Toleranzausgleichsvorrichtung ein Grundelement, welches eine axiale Richtung definiert, ein Ausgleichselement, welches zum Ausgleichen von Toleranzen zwischen den zu verbindenden Bauteilen relativ zum Grundelement bewegbar ist, und ein Sicherungsmittel zur Sicherung des Ausgleichselements gegen eine Bewegung relativ zum Grundelement. Das Sicherungsmittel ist unabhängig von einer Bewegung des Ausgleichselements relativ zum Grundelement lösbar.

Eine Befestigungseinrichtung mit Toleranzausgleich ist in der DE 10 2007 037 242 A1 beschrieben. Die Befestigungseinrichtung umfasst eine Basiseinheit, die aus einer am ersten Bauteil festlegbaren Blindnietmutter, einer Verstellgewindemutter und einem hülsenförmigen Käfig besteht, welche die Verstellgewindemutter aufnimmt und mit der Blindnietmutter verbindet. Zudem umfasst die Befestigungseinrichtung eine Verstelleinheit, die aus einer Gewindehülse, einer Anlageplatte und einer Mitnehmerbuchse besteht, welche die Gewindehülse und die Anlageplatte verbindet. Die Gewindehülse der Verstelleinheit ist in die Verstellgewindemutter der Basiseinheit über eine erste Gewindepaarung einer ersten Gangrichtung einschraubbar. Eine Befestigungsschraube ist über eine zweite Gewindepaarung einer entgegengesetzten zweiten Gangrichtung in die am Bauteil festgelegte Blindnietmutter einschraubbar. Die Befestigungsschraube bildet mit der Mitnehmerbuchse eine lösbare Mitschleppverbindung, um beim Drehen der Befestigungsschraube die Verstelleinheit mitzudrehen und dadurch die Anlageplatte zwecks Toleranzausgleich in Anlage mit dem Bauteil zu bewegen.

Ein Nachteil dieser Anordnungen ist, dass der Mitschleppabschnitt nicht schwimmend gelagert ist. Daher ist eine Fehlausrichtung der Befestigungsschraube beim Einsetzen in das Verstellelement nicht ausgleichbar. Diese Toleranzausgleichsanordnungen erfordern daher ein hohes Maß an Präzision bei der Verwendung.

Schließlich ist eine Befestigungsanordnung mit Toleranzausgleich in WO 2010/022841 A1 beschrieben. Die Anordnung weist ein Aufnahmeelement und ein Verstellelement auf, das über eine erste Gewindepaarung einer ersten Gangrichtung mit dem Aufnahmeelement verschraubbar ist. Durch eine Öffnung von Aufnahmeelement und Verstellelement ist eine Befestigungsschraube einsetzbar, die über eine zweite Gewindepaarung einer der ersten entgegengesetzten zweiten Gangrichtung in das Aufnahmeelement einschraubbar und mit den Verstellelement durch eine lösbare Mitschleppverbindung verbindbar ist. Auf diese Weise wird beim Drehen der Befestigungsschraube das Verstellelement mitgedreht und dadurch in Anlage mit dem zweiten Bauteil bewegt. Das Verstellelement besteht aus einem innerhalb eines Gewindeelements drehfest und schwimmend angeordneten Mitschlepper, sodass eine Fehlausrichtung der Befestigungsschraube beim Einsetzen in das Verstellelement ausgleichbar ist.

Ein Nachteil der Toleranzausgleichsanordnung mit schwimmendem Mitschlepper ist, dass die Toleranzausgleichsanordnung aus Kunststoff besteht. Somit fließt der Kraftfluss der über die Befestigungsschraube aufgebrachten Vorspannkraft bei der Verwendung dieser Toleranzausgleichsanordnung ausschließlich durch Kunststoffbauteile. Im Bereich geringer Festigkeiten reicht eine solche Verbindung aus. Sollen jedoch höhere Festigkeiten der Verbindung über die Toleranzausgleichsanordnung realisiert werden, dann fließt der Kunststoff bzw. verformt sich und die in die Toleranzausgleichsanordnung eingeleitete Vorspannkraft geht verloren.

Die Aufgabe der vorliegenden Erfindung ist daher, eine alternative Konstruktion einer Toleranzausgleichsanordnung bereitzustellen, die im Hinblick auf die bekannten Stand der Technik Toleranzausgleichsanordnungen optimiert ist, insbesondere im Hinblick auf die damit realisierbaren Festigkeiten bei einer gleichzeitigen Sicherstellung eines möglichst breiten Einsatzbereichs.

### 3. Zusammenfassung der Erfindung

Die obige Aufgabe wird gelöst durch eine Toleranzausgleichsanordnung zum Befestigen eines ersten Bauteils an einem zweiten Bauteil mit selbsttätigen Ausgleich von Toleranzen im Abstand zwischen dem ersten Bauteil und dem zweiten Bauteil gemäß dem unabhängigen Patentanspruch 1, ein erstes Bauteil in Kombination mit einer Toleranzausgleichsanordnung gemäß dem abhängigen Patentanspruch 9, ein erstes und ein zweites Bauteil, die über die Toleranzausgleichsanordnung mittels einer Befestigungsschraube aneinander befestigt sind, gemäß dem abhängigen Patentanspruch 10 sowie ein Herstellungsverfahren einer Toleranzausgleichsanordnung gemäß dem unabhängigen Patentanspruch 11. Vorteilhafte Ausführungsformen und Weiterentwicklungen ergeben sich aus der nachfolgenden Beschreibung, den Zeichnungen sowie den anhängigen Patentansprüche.

Eine erfindungsgemäße Toleranzausgleichsanordnung zum Befestigen eines ersten Bauteils an einem zweiten Bauteil mit selbsttätigem Ausgleich von Toleranzen im Abstand zwischen dem ersten Bauteil und dem zweiten Bauteil weist die folgenden Merkmale auf: ein Basiselement, das ein erstes Metallelement mit einem ersten Innengewinde und ein zweites Metallelement mit einem zweiten Innengewinde aufweist, die entlang einer Längsachse des Basiselements voneinander beabstandet sind, und eine Verstelleinheit, die eine Gewindehülse aus Metall mit einem Außengewinde und eine zumindest teilweise in der Gewindehülse angeordnete Mitschleppereinheit umfasst, wobei das Außengewinde mit dem ersten Innengewinde des ersten Metallelements des Basiselements eine erste Gewindepaarung einer ersten Gangrichtung bildet, während eine Befestigungsschraube durch eine Öffnung einer Basiseinheit, die aus dem Basiselement, dem ersten und dem zweiten Metallelement gebildet ist, und der Verstelleinheit einsetzbar ist, die über eine zweite Gewindepaarung einer der ersten entgegengesetzten zweiten Gangrichtung in das zweite Innengewinde des zweiten Metallelements des Basiselements einschraubbar ist und mit der Verstelleinheit über die Mitschleppereinheit durch eine lösbare Mitschleppverbindung verbindbar ist, um beim Eindrehen der Befestigungsschraube die Verstelleinheit mitzudrehen und dadurch in Anlage mit dem ersten Bauteil zu bewegen, wobei das erste Metallelement schwimmend im Basiselement angeordnet, sodass eine Fehlausrichtung der Befestigungsschraube beim Einsetzen in die Verstelleinheit ausgleichbar ist.

Nachfolgend wird das erfindungsgemäße Toleranzausgleichselement anhand seiner Verwendung illustriert. Dabei wird davon ausgegangen, dass das erfindungsgemäße Toleranzausgleichselement bereits in einem ersten Bauteil befestigt ist. Eine solche Befestigung erfolgt vorzugsweise über ein Außengewinde des Basiselements. Beispielsweise weist das Basiselement zu diesem Zweck in einem mittleren Bereich zwischen einem ersten axialen Ende und einem zweiten axialen Ende eine im Wesentlichen kreisförmige Außenform mit einem Außengewinde auf. Mittels dieses Außengewindes kann das Basiselement somit in eine entsprechende kreisförmige Öffnung im ersten Bauteil eingeschraubt werden.

Über dem ersten Bauteil wird ein zweites Bauteil angeordnet, wobei eine Öffnung im zweiten Bauteil vorzugsweise mit der Öffnung im ersten Bauteil ausgerichtet ist. Eine Befestigungsschraube wird zur Befestigung des zweiten Bauteils durch die Öffnung im zweiten Bauteil geführt und gelangt in Eingriff mit der Mitschleppereinheit der Verstelleinheit. Die Befestigungsschraube bildet mit der Mitschleppereinheit eine lösbare Mitschleppverbindung, um beim Drehen der Befestigungsschraube die Verstelleinheit mitzudrehen und dadurch die Verstelleinheit zwecks Toleranzausgleich in Anlage mit dem zweiten Bauteil zu bewegen. Beim Weiterdrehen der Befestigungsschraube, bei dem mit einer entsprechenden Erhöhung des Drehmoments die Mitschleppverbindung überwunden wird, gelangt die Befestigungsschraube mit dem zweiten Metallelement in Eingriff, sodass dann die beiden Bauteile durch die Befestigungsschraube über die Verstelleinheit miteinander verspannt werden können.

Das Basiselement, das vorzugsweise aus Kunststoff besteht, bildet zusammen mit dem ersten Metallelement und dem zweiten Metallelement die sogenannte Basiseinheit. Die Basiseinheit besteht somit aus drei individuellen Elementen oder Bauteilen. Das erste und das zweite Metallelement sind dabei drehfest im Basiselement angeordnet, damit sie bei einem Eindrehen oder Ausdrehen der Gewindehülse und der Befestigungsschraube nicht mitdrehen. Hierzu weisen das erste und das zweite Metallelement vorzugsweise eine rotationshemmende Außenkontur auf, die im Zusammenwirken mit der entsprechenden Innenkontur des Basiselements das Mitdrehen des ersten und zweiten Metallelements verhindert. Eine solche rotationshemmende Außenkontur kann beispielsweise jede beliebige eckige oder unrunde Außenkontur aber auch jede beliebige runde Außenkontur mit einem Vorsprung sein, der in eine Aussparung im Basiselement eingreift und so ein Mitdrehen verhindert. Das erste und/oder das zweite Metallelement bestehen bevorzugt aus dem gleichen Metall, beispielsweise Stahl. Ebenfalls bevorzugt sind das erste und das zweite Metallelement eine erste und eine zweite Mutter.

Das erste Metallelement wirkt mit der Gewindehülse aus Metall der Verstelleinheit zusammen und bildet so die erste Gewindepaarung der ersten Gangrichtung. Beispielsweise sind das Innengewinde des ersten Metallelements und das Außengewinde der Gewindehülse jeweils ein Linksgewinde. Das zweite Metallelement wirkt mit der Befestigungsschraube zusammen und bildet so die zweite Gewindepaarung der zweiten Gangrichtung, bezogen auf die durch ein Linksgewinde definierte erste Gangrichtung wird die zweite Gangrichtung dann durch ein Rechtsgewinde definiert.

Ein Vorteil der erfindungsgemäßen Toleranzausgleichsanordnung ist zunächst, dass verglichen mit einer reinen Kunststoff-Toleranzausgleichsanordnung höhere Festigkeiten der Verbindung zwischen den zu verbindenden Bauteilen erzielbar sind. Dies wird insbesondere aufgrund der ersten und der zweiten Gewindepaarung aus Metall, vorzugsweise aus Stahl, erzielt. Durch den Abstand zwischen dem ersten und dem zweiten Metallelement im Basiselement der Toleranzausgleichsanordnung ist zudem ein größerer Einsatzbereich der Toleranzausgleichsanordnung realisierbar, was insbesondere später unter Bezugnahme auf die bevorzugten Ausführungsformen erläutert wird. Im Vergleich zu den bekannten und oben beschriebenen Toleranzausgleichsanordnungen ist somit einerseits der Einsatzbereich erhöht während gleichzeitig höhere Festigkeiten mit der Toleranzausgleichsanordnung erzielbar sind und die Toleranzausgleichsanordnung aufgrund der Kombination aus Metall und Kunststoff weiterhin kostengünstig herstellbar ist.

In einer bevorzugten Ausführungsform umgibt das Basiselement das erste und das zweite Metallelement zumindest teilweise so, dass das erste und das zweite Metallelement im Basiselement drehfest angeordnet sind, wobei das Basiselement vorzugsweise aus Kunststoff besteht. Die drehfeste Anordnung sorgt entsprechend dafür, dass die Gewindehülse und somit die Verstelleinheit sich in Richtung zu oder von dem zweiten Bauteil bewegen können und die Befestigungsschraube in oder aus dem zweiten Metallelement gedreht werden kann, ohne dass es eines zusätzlichen Werkzeugs bedarf. Auf diese Weise bildet sich beim Eindrehen der Gewindehülse in das erste Metallelement und der Befestigungsschraube in das zweite Metallelement eine stabile Metall-Metall-Verbindung, die im Vergleich zu reinen Kunststoff-Kunststoff-Verbindungen größere Kräfte aufnehmen kann.

Erfindungsgemäß ist das erste Metallelement schwimmend im Basiselement angeordnet, sodass eine Fehlausrichtung der Befestigungsschraube beim Einsetzen in die Verstelleinheit ausgleichbar ist. Da das erste Metallelement schwimmend gelagert ist, ist die Verstelleinheit insgesamt schwimmend angeordnet und in der
Lage, bezogen auf ihre Längsachse radiale bzw. laterale Ausgleichsbewegungen innerhalb des Basiselements auszuführen. Bei
einer entsprechenden Formgestaltung von Basiselement und erstem Metallelement besteht ebenfalls die Möglichkeit, dass eine winklige Ausgleichsbewegung durch die Verstelleinheit innerhalb des Basiselements ausführbar ist. In diesem Zusammenhang kann das zweite Metallelement ebenfalls schwimmend im Basiselement angeordnet sein. In einer bevorzugten Ausführungsform ist das zweite Metallelement durch eine eingepresste Mutter realisiert, so dass es nicht schwimmend gelagert ist. Insbesondere mittels dieser Ausführungsform ist ein großer Einsatzbereich der Toleranzausgleichsanordnung realisierbar, da die schwimmende Anordnung des ersten Metallelements Fehlausrichtungen der Befestigungsschraube ausgleicht. Gleichzeitig ist durch die verwendeten Bauteile aus Metall eine höhere Festigkeit der Verbindung mittels der Toleranzausgleichsanordnung erzielbar, die aufgrund der vorhandenen Kunststoffelemente auch noch kostengünstiger ist im Vergleich zu einer Toleranzausgleichsanordnung nur aus Metall.

Gemäß einer weiteren vorteilhaften Ausführungsform umfasst das Basiselement ein erstes Ende mit einem ersten Innendurchmesser und ein entgegengesetztes zweites Ende mit einem zweiten Innendurchmesser, der kleiner ist als der erst Innendurchmesser und vorzugsweise nicht größer ist als der Innendurchmesser des zweiten Metallelements. Das erste Metallelement ist benachbart zum ersten Ende und das zweite Metallelement benachbart zum zweiten Ende angeordnet. Auf diese Weise sind, gemäß der Erfindung, das erste und das zweite Metallelement entlang einer Längsachse des Basiselements voneinander beabstandet. In einer besonders vorteilhaften Ausführungsform ist der zweite Durchmesserbereich in Einschraubrichtung der Befestigungsschraube hinter dem zweiten Metallelement angeordnet. Auf diese Weise ist es nicht erforderlich, dass das zweite Metallelement selbstsichernd ausgeführt ist, da der zweite Durchmesserbereich eine Sicherung gegen selbstständiges Lösen der Befestigungsschraube darstellt.

Ebenfalls bevorzugt weist das Basiselement eine erste laterale Öffnung für die Aufnahme des ersten Metallelements und/oder eine zweite laterale Öffnung für die Aufnahme des zweiten Metallelements auf, wobei die erste und die zweite laterale Öffnung vorzugsweise axial übereinander angeordnet sind. Auf diese Weise kann zunächst das Basiselement hergestellt werden, beispielsweise mittels Spritzgießen. Vor der Montage der Verstelleinheit werden dann das erste und/oder das zweite Metallelement über die lateralen Öffnungen in das Basiselement eingesetzt oder eingeschoben. In einer alternativen Ausführungsform können das erste und/oder das zweite Metallelement auch zusammen mit dem Basiselement hergestellt werden, also in den Kunststoff eingebettet sein. Im Hinblick auf die Ausführungsform mit der schwimmenden Lagerung des ersten und/oder des zweiten Metallelements ist ein Ein- bzw. Umspritzen des jeweiligen Metallelements nicht möglich. Da erfindungsgemäß das erste Metallelement schwimmend im Basiselement angeordnet ist, ist ein Ein- bzw. Umspritzen des ersten Metallelements nicht möglich. In der Ausführungsform mit schwimmender Lagerung erfolgt somit ein Einsetzen oder Einschieben über die jeweilige laterale Öffnung.

In einer besonders vorteilhaften Ausführungsform umfasst die Mitschleppereinheit einen Mitschlepper, vorzugsweise aus Kunststoff, sowie eine Anlagescheibe, vorzugsweise aus Metall, wobei der Mitschlepper mittels Presssitz in der Gewindehülse gehalten ist. Im Hinblick auf die Anordnung des Mitschlepper mittels Presssitz in der Gewindehülse wird auf die Anmeldung DE 10 2007 037 242 A1 verwiesen. In einer besonders bevorzugten Ausführungsform weist der Mitschlepper ein erstes und ein zweites axiales Ende auf, wobei das erste axiale Ende bündig mit einer ersten Seite der Anlagescheibe angeordnet ist und eine zweite der ersten Seite gegenüberliegende Seite der Anlagescheibe liegt an der Gewindehülse an. Das erste axiale Ende weist beispielsweise einen ersten Ring auf, vorzugsweise mit Quetschsegmenten zur Befestigung der Anlagescheibe. Die obere Seite des ersten Rings, also die Seite dem Basiselement abgewandte Seite des ersten Rings, schließt bündig mit der ersten Seite Anlagescheibe ab. Weiterhin weist der Mitschlepper einen zweiten Ring auf, der mit dem ersten Ring über beispielsweise zwei Schleppstege verbunden, die federnd radial nach innen ragend einen Durchgangsbereich für die Befestigungsschraube verengen. Auf diese Weise wird die Anlagescheibe fest durch den Mitschlepper in Kontakt mit der Gewindehülse gehalten. Die Verstelleinheit besteht in diesem Fall aus der Gewindehülse aus Metall, dem Mitschlepper, der vorzugsweise aus Kunststoff besteht, und der Anlagescheibe, die vorzugsweise auch aus Metall besteht.

Ebenfalls bevorzugt weist der Mitschlepper einen ersten radial nach außen ragenden Vorsprung benachbart dem zweiten axialen Ende auf und das Basiselement weist einen ersten radial nach innen ragenden Vorsprung auf, die gemeinsam eine Kontersicherung bilden. Der erste Vorsprung des Mitschleppers ist dabei insbesondere am zweiten Ring des Mitschleppers angeordnet. Aufgrund der Ausführung des ersten Metallelements, des zweiten Metallelements und der Gewindehülse aus Metall, sind die entsprechenden Innen- bzw. Außengewinde spannend hergestellt. Im Vergleich zu einer Herstellung aus Kunststoff ist die Bereitstellung eines Endanschlags der jeweiligen Gewinde daher nicht möglich. Um dennoch eine Kontersicherung bereitzustellen, um insbesondere ein Verkontern der Gewindehülse im ersten Metallelement zu verhindern, werden die beiden zusammenwirkenden Vorsprünge bereitgestellt. Die beiden Vorsprünge sind so dimensioniert, dass der erste Vorsprung des Mitschleppers beim Zurückdrehen der Verstelleinheit sicher gegen den ersten Vorsprung des Basiselements mit einer ausreichenden Überdeckung anschlägt. Gleichzeitig erfolgt die Dimensionierung so, dass beim Ausdrehen der Verstelleinheit nach einer Umdrehung der erste Vorsprung des Mitschleppers berührungsfrei den ersten Vorsprung des Basiselements passieren kann. Bei der Herstellung der Toleranzausgleichsanordnung ist daher ein lagerichtiges Montieren der Verstelleinheit bzw. des Mitschleppers besonders wichtig, was später detailliert diskutiert wird.

In einer weiteren bevorzugten Ausführungsform weist der Mitschlepper mindestens einen zweiten radial nach außen ragenden Vorsprung benachbart dem zweiten axialen Ende auf, und das Basiselement weist mindestens einen Durchbruch auf, die gemeinsam eine Transportsicherung bilden, insbesondere gegen Drehen. Der zweite radiale Vorsprung ist vorzugsweise an einem dritten Ring des Mitschleppers angeordnet. Der dritte Ring ist vorzugsweise über Stege mit dem zweiten Ring an der dem ersten Ring abgewandten Seite verbunden. Im vollständig eingeschraubten Zustand der Verstelleinheit in das Basiselement steht der zweite Vorsprung des Mitschleppers mit dem mindestens einen Durchbruch des Basiselements in Eingriff. Dies ist vorzugsweise der Zustand, in dem der erste Vorsprung des Mitschleppers mit dem ersten Vorsprung des Basiselements in Eingriff steht, also die Kontersicherung greift. Dabei ist es vorteilhaft, wenn der erste radiale Vorsprung des Mitschleppers für die Kontersicherung versetzt ist bezogen auf den zweiten radialen Vorsprung zur Bildung der Transportsicherung. Beispielsweise kann die Transportsicherung durch zwei zweite radiale Vorsprünge am Mitschlepper gebildet werden, die sich gegenüber liegen. Der erste radiale Anschlag kann zwischen diesen angeordnet sein, beispielsweise bei einem Winkel von 90°. Insbesondere im Hinblick auf die Ausgestaltung der Transportsicherung wird auf die WO 2010/022841 A1 verwiesen. Besonders bevorzugt ist der dritte Ring daher oval ausgebildet, so dass beim Durchführen der Befestigungsschraube der mindestens eine zweite radial nach außen ragende Vorsprung des Mitschleppers durch eine radial nach innen gerichtete Verformungsbewegung entriegelbar ist.

In einer weiteren vorteilhaften Ausführungsform weist der Mitschlepper mindestens ein erstes Führungselement auf, mit dem ein lagerichtiges Anordnen des Mitschleppers in der Verstelleinheit und somit auch im Basiselement realisierbar ist. Besonders bevorzugt weist der Mitschlepper zusätzlich ein zweites Führungselement auf. Das erste Führungselement ist länger als das zweite Führungselement. Aufgrund der unterschiedlichen Längen der Führungselemente, die sich vorzugsweise vom zweiten Ring des Mitschleppers in Richtung des ersten Rings des Mitschleppers erstrecken, ist eine automatische Zuführung des Mitschleppers im Rahmen eines Herstellungsverfahrens realisierbar. Auf diese Weise kann insbesondere die lagerichtige Orientierung des Mitschleppers beim Einsetzen des Mitschleppers in die Gewindehülse realisiert werden, sodass die Kontersicherung und die Transportsicherung im vormontierten Zustand wirksam sind, in dem Verstelleinheit und Basiselement aneinander befestigt sind.

Ein erfindungsgemäßes erstes Bauteil liegt in Kombination mit einer Ausführungsform der oben beschriebenen erfindungsgemäßen Toleranzausgleichsanordnung vor, wobei die Toleranzausgleichsanordnung in das erste Bauteil eingeschraubt ist. Zu diesem Zweck weist die erfindungsgemäße Toleranzausgleichsanordnung vorzugsweise ein Außengewinde am Basiselement auf. Das erste Bauteil in Kombination mit der Toleranzausgleichsanordnung weist die oben beschriebenen Vorteile der Toleranzausgleichsanordnung auf, so dass auf die entsprechenden Ausführungen verwiesen wird.

Erfindungsgemäß sind ein erstes und ein zweites Bauteil über eine Ausführungsform der oben beschriebenen erfindungsgemäßen Toleranzausgleichsanordnung sowie mittels einer Befestigungsschraube aneinander befestigt. Die Befestigungsschraube besteht vorzugsweise aus Metall, insbesondere aus Stahl. Auf diese Weise stellt auch die zweite Gewindepaarung der zweiten Gangrichtung eine Metall-Metall-Verbindung dar. Die aneinander befestigten Bauteile weisen ebenfalls die oben beschriebenen Vorteile der erfindungsgemäßen Toleranzausgleichsanordnung auf, so dass auch in diesem Zusammenhang auf die entsprechenden Ausführungen verwiesen wird.

Ein erfindungsgemäßes Herstellungsverfahren der oben beschriebenen Ausführungsformen der Toleranzausgleichsanordnung umfasst die folgenden Schritte: Bereitstellen eines Basiselements, das ein erstes Metallelement mit einem ersten Innengewinde und ein zweites Metallelement mit einem zweiten Innengewinde aufweist, Bereitstellen einer Verstelleinheit, die eine Gewindehülse aus Metall mit einem Außengewinde und eine Mitschleppereinheit umfasst, danach Einschrauben der Gewindehülse in das erste Metallelement, wobei das Außengewinde mit dem ersten Innengewinde des ersten Metallelements des Basiselements eine erste Gewindepaarung einer ersten Gangrichtung bildet. Mit der erfindungsgemäß hergestellten Toleranzausgleichsanordnung sind die oben beschriebenen Vorteile der erfindungsgemäßen Toleranzausgleichsanordnung realisierbar. In dieser Hinsicht wird erneut auf die entsprechenden Ausführungen verwiesen. Das Einschrauben der Gewindehülse in das erste Metallelement erfolgt vorteilhafterweise so, dass ein definierter Überstand der Gewindehülse über das erste Metallelement vorhanden ist. Der definierte Überstand hängt dabei von der Länge der Mitschleppereinheit, insbesondere des Mitschleppers ab, wie später erläutert wird. Insbesondere muss das Einschrauben so erfolgen, dass bei Vorhandensein des ersten und/oder zweiten Vorsprungs am Mitschlepper die Kontersicherung und/oder die Transportsicherung ihre Funktion erfüllen können.

In einer vorteilhaften Ausführungsform des Herstellungsverfahrens umfasst der Schritt des Bereitstellens des Basiselements ein Anordnen des ersten Metallelements benachbart zu einem ersten Ende des Basiselements, vorzugsweise mittels Einführen des ersten Metallelements in das Basiselement über eine erste laterale Öffnung des Basiselements. Insbesondere ist mittels diesem Anordnen die erfindungsgemäße schwimmende Lagerung des ersten Metallelements im Basiselement realisierbar, wie oben beschrieben.

In einer weiteren vorteilhaften Ausführungsform umfasst der Schritt des Bereitstellens der Verstelleinheit ein Bereitstellen der Gewindehülse und einer Mitschleppereinheit umfassend eine Anlagescheibe, vorzugsweise aus Metall, und eines Mitschleppers, vorzugsweise aus Kunststoff. In einer weiteren bevorzugten Ausführungsform umfasst das Herstellungsverfahren den weiteren Schritt des Einpressens des Mitschleppers in die in das erste Metallelement eingeschraubte Gewindehülse, sodass eine Anlagescheibe mit einer ersten Seite bündig mit einem ersten Ende des Mitschleppers abschließt und mit einer der ersten Seite entgegengesetzten zweiten Seite an der Gewindehülse anliegt. In diesem Zusammenhang wird auf die obigen Ausführungen zum Aufbau der Toleranzausgleichsanordnung verwiesen, woraus sich auch die entsprechenden Vorteile ergeben.

Gemäß einer besonders bevorzugten Ausführungsform weist der Mitschlepper einen ersten radial nach außen ragenden Vorsprung auf, der nach dem Einpressen des Mitschleppers benachbart zu einem radial nach innen ragenden Vorsprung des Basiselements angeordnet ist, sodass eine Kontersicherung gebildet ist. In einer weiteren bevorzugten Ausführungsform weist der Mitschlepper mindestens einen zweiten radial nach außen ragenden Vorsprung auf, der nach dem Einpressen des Mitschleppers in einem Durchbruch des Basiselements angeordnet ist, sodass eine Transportsicherung gebildet ist. Im Hinblick auf die Funktionsweise der jeweiligen Sicherungen wird ebenfalls auf die Ausführungen zur Toleranzausgleichsanordnung verwiesen.

### 4. Kurzzusammenfassung der Zeichnungen

Nachfolgend wird die vorliegende Erfindung unter Bezugnahme auf die Zeichnungen detailliert beschrieben. Gleiche Bezugszeichen in den Zeichnungen bezeichnen dabei gleiche Bauteile und/oder Elemente. Es zeigen:
- Figur 1: eine Explosionsansicht einer Ausführungsform der erfindungsgemäßen Toleranzausgleichsanordnung,
- Figur 2: eine Seitenansicht einer Ausführungsform der erfindungsgemäßen Toleranzausgleichsanordnung,
- Figur 3: eine Schnittansicht der Ausführungsform gemäß Figur 2 entlang der Linie A-A,
- Figur 4: eine Schnittansicht der Ausführungsform gemäß Figur 2 entlang der Linie B-B,
- Figur 5: eine Draufsicht auf die Ausführungsform gemäß Figur 2,
- Figur 6: eine Draufsicht auf eine Ausführungsform der Basiseinheit einer Ausführungsfonn der erfindungsgemäßen Toleranzausgleichsanordnung,
- Figur 7: eine Schnittansicht der Ausführungsform gemäß Figur 6 entlang der Linie A-A,
- Figur 8: eine perspektivische Ansicht einer Ausführungsform des Basiselements einer Ausführungsform der erfindungsgemäßen Toleranzausgleichsanordnung,
- Figur 9: eine Ausführungsform des Mitschlepper einer Ausführungsform der erfindungsgemäßen Toleranzausgleichsanordnung und
- Figur 10: einen schematischen Ablauf einer Ausführungsform eines Herstellungsverfahrens einer Ausführungsform der erfindungsgemäßen Toleranzausgleichsanordnung.

### 5. Detaillierte Beschreibung der bevorzugten Ausführungsformen

Nachfolgend wird eine Ausführungsform einer Toleranzausgleichsanordnung 1 gemäß der vorliegenden Erfindung detailliert beschrieben. Bei der Toleranzausgleichsanordnung 1 handelt es sich um eine Anordnung zum Befestigen eines ersten Bauteils an einem zweiten Bauteil mit selbsttätigem Ausgleich von Toleranzen im Abstand zwischen dem ersten Bauteil und dem zweiten Bauteil.

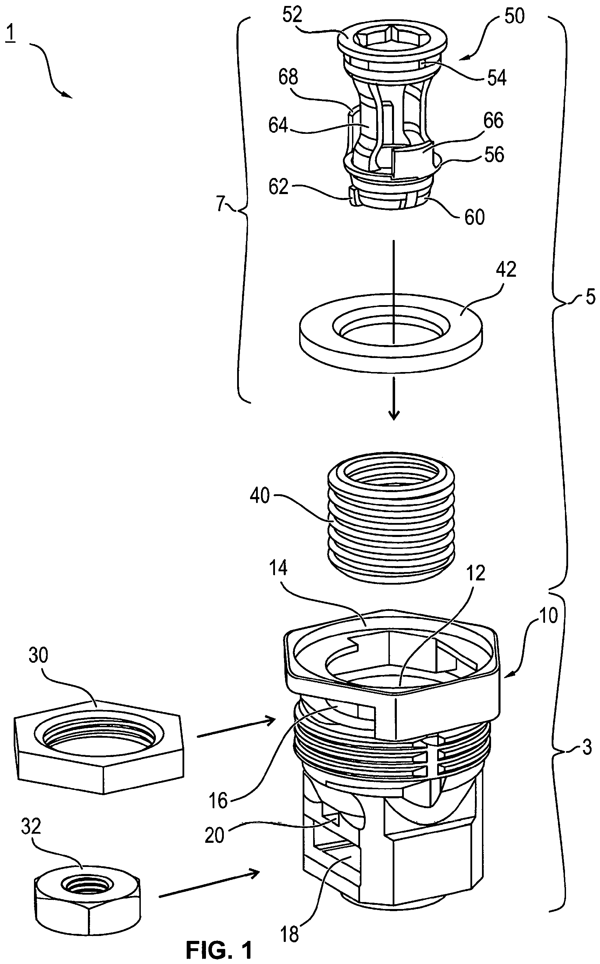

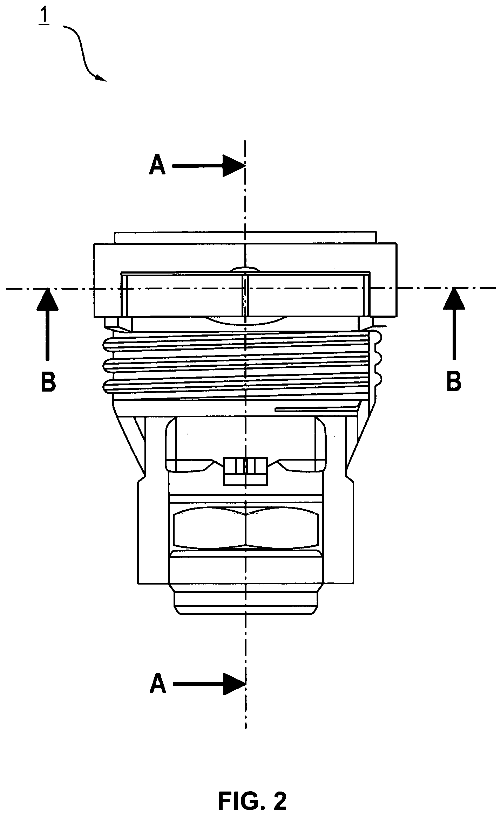

Bezug nehmend auf Figur 1 besteht die Toleranzausgleichsanordnung 1 aus einer Basiseinheit 3 und einer Verstelleinheit 5. Die Verstelleinheit 5 umfasst wiederum eine Gewindehülse 40 mit Außengewinde und eine Mitschleppereinheit 7. Die Ausführungsform der Toleranzausgleichsanordnung 1 wird nun weiter unter Bezugnahme auf die Figuren 1 bis 5 diskutiert.

Die Basiseinheit 3 besteht aus drei Elementen oder Bauteilen, nämlich dem Basiselement 10 sowie einem ersten Metallelement 30 mit einem ersten Innengewinde und einem zweiten Metallelement 32 mit einem zweiten Innengewinde. Das Basiselement 10 besteht vorzugsweise aus Kunststoff und wurde beispielsweise mittels Spritzgießen hergestellt. Das erste 30 und das zweite Metallelement 32 sind Muttern mit einer im Wesentlichen sechseckigen Außenform. Benachbart zur jeweiligen Öffnung weisen das erste 30 und das zweite Metallelement 32 jeweils beidseitig eine Fase auf. Die beidseitige vorhandene Fase am ersten 30 und zweiten Metallelement 32 gewährleistet, dass insbesondere bei einer automatischen Zufuhr der Metallelemente 30, 32 nicht auf eine lagerichtige Orientierung geachtet werden muss. In einer alternativen Ausgestaltung kann die Fase auch nur einseitig am jeweiligen Metallelement 30, 32 vorgesehen sein. Hierbei ist dann jedoch auf die lagerichtige Zufuhr zu achten. Dies bedeutet, dass die Fase beim Einsetzen des jeweiligen Metallelements 30, 32 oben angeordnet sein muss, also dem ersten Ende des Basiselements 10 zugewandt sein muss.

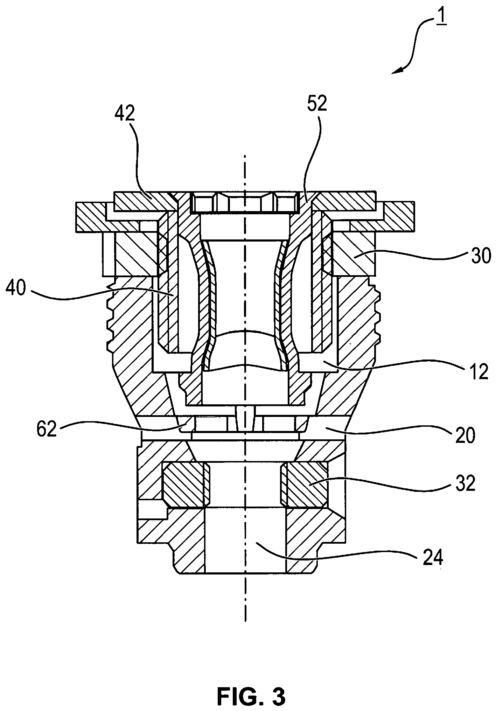

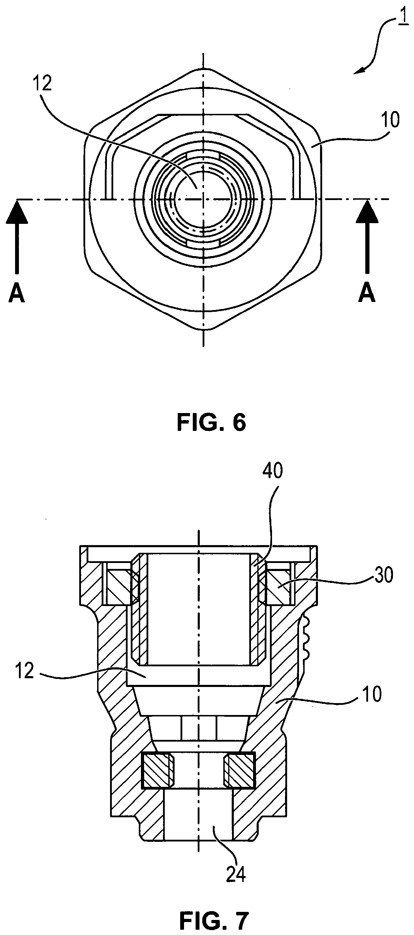

Das Basiselement 10 weist, wie insbesondere in den Figuren 3 und 6 bis 8 gut erkennbar ist, entlang seiner Längsachse eine Bohrung 12 auf. Die Bohrung 12 definiert einen Durchlass für eine Befestigungsschraube bei der Verwendung der Toleranzausgleichsanordnung 1. Zusätzlich Bezug nehmend auf Figur 1 weist das Basiselement 10 benachbart einem ersten oder oberen Ende des Basiselements 10 eine erste laterale Öffnung 16 auf. Die erste laterale Öffnung 16 ist so dimensioniert, dass das erste Metallelement 30 durch die erste Öffnung 16 einsetzbar ist, insbesondere einschiebbar. Weiterhin weist das Basiselement 10 benachbart einem zweiten oder unteren Ende des Basiselements 10 eine zweite laterale Öffnung 18 auf. Über die zweite laterale Öffnung 18 ist das zweite Metallelement 32 in das Basiselement 10 einsetzbar. Die erste 16 und die zweite laterale Öffnung 18 sind axial entlang der Längsachse des Basiselements 10 voneinander beabstandet und vorzugsweise mittig übereinander angeordnet. Insbesondere verläuft eine Gerade von den geometrischen Mittelpunkten der Öffnungen 16 und 18 parallel zur Längsachse des Basiselements 10.

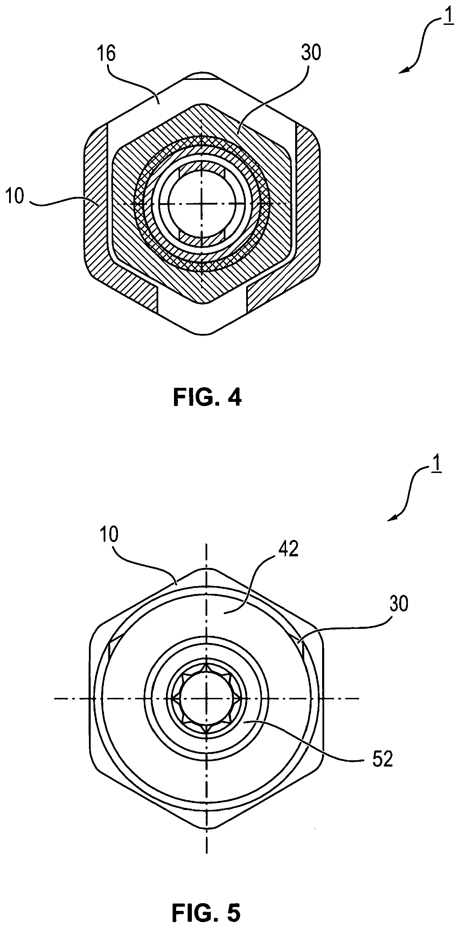

Im Inneren des Basiselements 10 werden das erste Metallelement 30 und das zweite Metallelement 32 drehfest gehalten, wie für das erste Metallelement 30 beispielsweise in Figuren 4 und 5 dargestellt. Um dieses drehfeste Halten zu realisieren, weist das Basiselement 10 im Bereich der ersten lateralen Öffnung 16 eine entsprechende Innenkontur auf. Oberhalb des Bereichs der ersten lateralen Öffnung 16 ist ein Bereich mit einer Freimachung 14 vorgesehen, der so gestaltet ist, dass er einerseits eine Anlagescheibe 42 aufnehmen kann und andererseits eine Bewegung des ersten Metallelements 30 in Richtung des ersten Endes des Basiselements 10 limitiert. Aufgrund dieser Gestaltung im Inneren des Basiselements 10 wird das erste Metallelement 30 im Basiselement 10 schwimmend gelagert, was nachfolgend noch erläutert wird.

Auch im Bereich der zweiten lateralen Öffnung 18 sorgt eine entsprechende Innenkontur des Basiselements 10 für eine drehfeste Anordnung des zweiten Metallelements 32. Das zweite Metallelement 32 wird dabei insbesondere in das Basiselement 10 über die zweite laterale Öffnung 18 eingepresst und ist daher vorzugsweise nicht schwimmend gelagert. Alternativ kann das zweite Metallelement 32 auch bereits bei der Herstellung des Basiselements 10 vorhanden sein und dementsprechend in den Kunststoff des Basiselements 10 eingebettet sein. In diesem Fall kann die zweite laterale Öffnung 18 entfallen.

Die Innenkontur des Basiselements 10 wird nachfolgend unter Bezugnahme auf die Figuren 3 und 6 bis 8 erläutert.Das Basiselement 10 weist benachbart dem ersten Ende, insbesondere unterhalb der ersten lateralen Öffnung 16, einen ersten Innendurchmesser auf, der von der Höhe, also entlang der Längsachse des Basiselements 10, so dimensioniert ist, dass die Gewindehülse 40 darin fast vollständig anordenbar ist. Der Bereich mit dem ersten Innendurchmesser geht über eine erste Stufe in einen ersten konischen Bereich über. In diesem ersten konischen Bereich ist ein erster radial nach innen ragender Vorsprung 22 vorgesehen, dessen Funktion später erläutert wird.

Der erste konische Bereich geht über eine zweite Stufe in einen zweiten konischen Bereich über. Der zweite konische Bereich weist die Durchbrüche 20 auf, deren Funktion ebenfalls später erläutert wird. Anstelle der Durchbrüche 20 können auch Vertiefungen, Aussparungen oder ähnliches vorgesehen sein. An den zweiten konischen Bereich schließt sich der Bereich mit der an das zweite Metallelement 32 angepassten Innenkontur an. Danach folgt, benachbart dem zweiten Ende, ein Bereich 24 mit einem im Vergleich zum ersten Innendurchmesser verringerten zweiten Innendurchmesser. Der zweite Innendurchmesser ist insbesondere so dimensioniert, dass er eine Sicherung für eine darin eingeschraubte Befestigungsschraube gegen ein selbstständiges Lösen bereitstellt. Daher ist der zweite Innendurchmesser nicht nur kleiner als der erste Innendurchmesser sondern insbesondere nicht größer als der Innendurchmesser des zweiten Metallelements 32.

Im Hinblick auf eine äußere Gestaltung des Basiselements 10 weist dieses benachbart dem ersten Ende eine sechseckige Außenform auf und benachbart dem zweiten Ende in Höhe der zweiten lateralen Öffnung 18 eine rechteckige Form mit abgerundeten Ecken. Im Mittelbereich ist das Basiselement 10 rund und mit einem Außengewinde versehen. Das Außengewinde des Basiselements 10 dient zur Befestigung in einem ersten Bauteil, insbesondere mittels Einschrauben, wobei der sechseckige Bereich benachbart dem ersten Ende eine Einschraubbegrenzung sowie ein Angriffsmerkmal für ein Werkzeug zum Einschrauben bereitstellt.

Die Verstelleinheit 5, wie bereits erläutert, umfasst die Mitschleppereinheit 7 und die Gewindehülse 40 aus Metall, insbesondere Stahl. Die Bauteile der Verstelleinheit 5 werden nachfolgend unter Bezugnahme auf die Figuren 1, 3, 5, 7 und 9 erläutert. Wie in Figur 1 erkennbar, weist die Gewindehülse 40 mit Außengewinde an ihren Enden jeweils eine Fase auf. Das Außengewinde der Gewindehülse 40 bildet mit dem Innengewinde des ersten Metallelements 30 die erste Gewindepaarung der ersten Gangrichtung. Beispielsweise sind das erste Innengewinde und das Außengewinde der Gewindehülse 40 Linksgewinde.

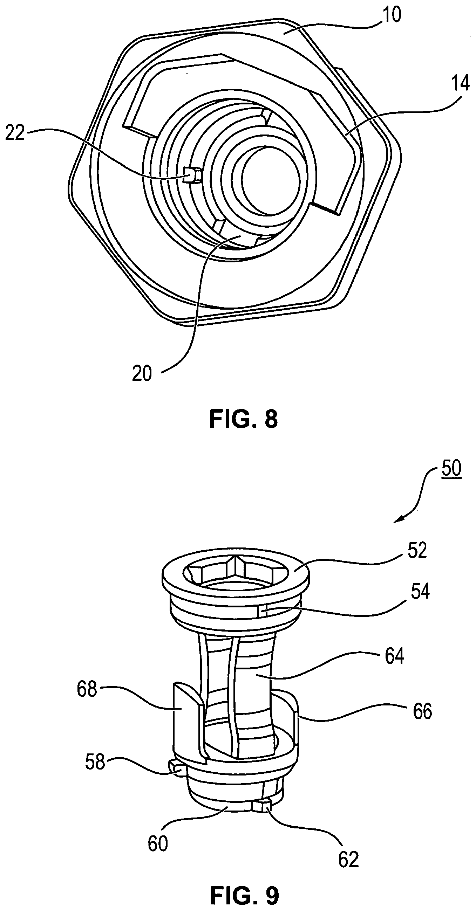

Die Mitschleppereinheit 7 umfasst eine Anlagescheibe 42 und einen Mitschlepper 50. Die Anlagescheibe 42 weist jeweils eine Fase an ihrer Innenkante auf. Der Mitschlepper 50, der einzeln in Figur 9 dargestellt ist, umfasst am ersten Ende einen ersten Ring 52 mit Quetschsegmenten 54 und an einem zweiten Ende einen zweiten Ring 56. Der erste 52 und der zweite Ring 56 sind über beispielsweise zwei Schleppstege 64 miteinander verbunden, die federnd radial nach innen ragend einen Durchgangsbereich für die Befestigungsschraube verengen. Auf diese Weise wird das Mitschleppen der Verstelleinheit 5 bei einer späteren Verwendung realisiert.

Vom zweiten Ring 56 erstrecken sich, vorzugsweise senkrecht, ein erster Führungsabschnitt 66 sowie ein zweiter Führungsabschnitt 68 in Richtung des ersten Rings 54. Hierbei ist der erste Führungsabschnitt 66 kürzer ausgestaltet als der zweite Führungsabschnitt 68. Mit den beiden Führungsabschnitten 66 und 68 ist insbesondere bei einem automatischen Herstellungsverfahren eine lagerichtige Montage des Mitschleppers 50 in der Toleranzausgleichsanordnung 1 realisierbar. Weiterhin weist der zweite Ring 56 einen ersten radial nach außen ragenden Vorsprung 58 auf. Im Ausgangszustand der Toleranzausgleichsanordnung 1 wirkt dieser erste Vorsprung 58 mit dem ersten Vorsprung 22 des Basiselements 10 zusammen. Die Notwendigkeit der beiden Vorsprünge 58 und 22 ergibt sich daraus, dass die Gewinde der Gewindehülse 40 und des ersten Metallelements 30 spanend hergestellt werden. Im Vergleich zu einer Herstellung der Bauteile aus Kunststoff ist die Bereitstellung eines Endanschlags der jeweiligen Gewinde daher nicht möglich. Um dennoch eine Kontersicherung zu realisieren und so insbesondere ein Verkontern der Gewindehülse 40 im ersten Metallelement 30 zu verhindern, werden die beiden zusammenwirkenden Vorsprünge 58 und 22 bereitgestellt. Die beiden Vorsprünge 58 und 22 sind so dimensioniert, dass der erste Vorsprung 58 des Mitschleppers 50 beim Zurückdrehen der Verstelleinheit 5, also beim Ausbau der Toleranzausgleichsanordnung 1, sicher gegen den ersten Vorsprung 22 des Basiselements 10 mit einer ausreichenden Überdeckung anschlägt. Gleichzeitig erfolgt die Dimensionierung so, dass beim Ausdrehen der Verstelleinheit 5, also bei der Montage der Toleranzausgleichsanordnung 1, nach einer Umdrehung der erste Vorsprung 58 des Mitschleppers 50 berührungsfrei den ersten Vorsprung 22 des Basiselements 10 passiert. Bei der Herstellung der Toleranzausgleichsanordnung 1 ist daher ein lagerichtiges Montieren der Verstelleinheit 5 bzw. des Mitschleppers 50 besonders wichtig und erfolgt so, dass die beiden Vorsprünge 58 und 22 nach der Herstellung benachbart zueinander angeordnet sind.

Der Mitschlepper 50 weist zudem einen dritten Ring 60 mit zwei zweiten radialen Vorsprüngen 62 auf, deren Funktionsweise ebenfalls nachfolgend erläutert wird. Die zwei zweiten radialen Vorsprünge sind auf gegenüberliegenden Seiten des dritten Rings 60 angeordnet. Der erste Vorsprung 58 des zweiten Rings 56 ist vorzugsweise mittig zwischen den zwei zweiten Vorsprüngen 62 des dritten Rings 60 angeordnet. Der dritte Ring 60 ist über Stege mit dem zweiten Ring 56 an der dem ersten Ring 52 abgewandten Seite verbunden. Zudem ist der dritte Ring 60 oval ausgebildet, so dass beim Durchführen der Befestigungsschraube die zweiten radial nach außen ragenden Vorsprünge 62 des Mitschleppers 50 durch eine radial nach innen gerichtete Verformungsbewegung entriegelbar sind. Im vollständig eingeschraubten Zustand der Verstelleinheit 5 in das Basiselement 10 stehen die zweiten Vorsprünge 62 des Mitschleppers 50 mit den Durchbrüchen 20 des Basiselements 10 in Eingriff. Die zweiten Vorsprünge 62 bilden auf diese Weise mit den Durchbrüchen 20 des Basiselements 10 eine Transportsicherung, insbesondere gegen Drehen. In diesem Zustand ist auch der erste Vorsprung 58 des Mitschleppers 50 benachbart dem ersten Vorsprung 22 des Basiselements 10 angeordnet.

Im montierten Zustand der Verstelleinheit 5 schließt eine Oberseite des ersten Rings 52 des Mitschleppers 50 bündig mit einer ersten Seite der Anlagescheibe 42 ab. Die zweite Seite der Anlagescheibe 42 befindet sich in Anlage an der Gewindehülse 40, wie beispielsweise in Figur 3 erkennbar. Figur 3 zeigt hierbei eine Schnittansicht durch eine Ausführungsform der Toleranzausgleichsanordnung 1. Die Anlagescheibe 42 wird dabei mittels der Quetschsegmente 54 am ersten Ring 52 des Mitschleppers 50 gehalten.

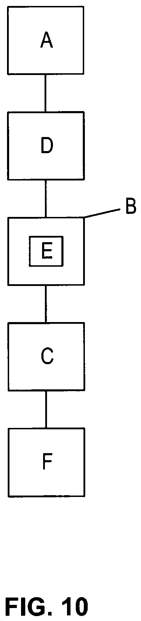

Nachfolgend und unter Einbeziehung der Figur 10 wird das Herstellungsverfahren der Toleranzausgleichsanordnung 1 erläutert. Zunächst wird das Basiselement 10 mit dem ersten 30 und dem zweiten Metallelement 32 bereitgestellt (Schritt A) und die beiden Metallelemente 30, 32 werden in das Basiselement eingesetzt oder eingeschoben (Schritt D). Alternativ, und wenn das zweite Metallelement 32 in das Basiselement 10 bereits beim Spritzgießen eingearbeitet wurde, wird lediglich das erste Metallelement 30 über die erste laterale Öffnung 16 in das Basiselement 10 eingesetzt. In beiden Fällen ist jedoch zumindest das erste Metallelement 30 schwimmend im Basiselement 10 gelagert, insbesondere mit seitlichem Spiel. Aufgrund der schwimmenden Lagerung des ersten Metallelements 30 ist sichergestellt, dass die vollständige Verstelleinheit 5 bestehend aus der Gewindehülse 40 sowie dem Mitschlepper 50 und der Anlagescheibe 42 ebenfalls schwimmend gelagert ist. Somit ist ein klemmfreies Ausdrehen der Verstelleinheit 5 auch bei radialer Auslenkung der Befestigungsschraube gegeben.

Weiterhin wird die Verstelleinheit 5 mit der Mitschleppereinheit 7 und der Gewindehülse 40 bereitgestellt (Schritt B). Die Mitschleppereinheit 7 wird dabei vorzugsweise mit den getrennten Bauteilen Mitschlepper 50 und Anlagescheibe 42 bereitgestellt (Schritt E).

Nun wird die Gewindehülse 40 in das erste Metallelement 30 im Basiselement 10 eingeschraubt. Gemäß dem obigen Beispiel handelt es sich dabei um Linksgewinde, die die erste Gewindepaarung der ersten Gangrichtung bilden. Beim Einschrauben wird eine definierte Höhe genau eingehalten, damit der erste Vorsprung 58 und die zweiten Vorsprünge 62 des Mitschleppers 50 mit den entsprechenden Gegenstücken, also dem ersten Vorsprung 22 und den Durchbrüchen 20 des Basiselements 10 nach der Herstellung der Toleranzausgleichsanordnung 1 richtig zusammenwirken. Die erforderliche Höhe ergibt sich somit aus der bereits beschriebenen Funktionsweise und hängt von der Dimensionierung der einzelnen Bauteile der Toleranzausgleichsanordnung 1 ab. Aufgrund des Zusammenwirkens des Außengewindes der Gewindehülse 40 aus Metall mit dem Innengewinde des ersten Metallelements 30 ist eine höhere Festigkeit der Verbindung erzielbar, wobei aufgrund der Verwendung eines Basiselements aus Kunststoff eine kostengünstige Toleranzausgleichsanordnung bereitgestellt wird, im Vergleich zu einer vollständig aus Metall hergestellten Toleranzausgleichsanordnung.

Nach dem Einschrauben der Gewindehülse 40 wird die Anlagescheibe 42 durch lagerichtiges Einpressen des Mitschleppers 50 mit der Gewindehülse 40 verbunden (Schritt F). Das Einpressen des Mitschleppers 50 erfolgt mit einem ebenen Stempel, der im Durchmesser größer als der erste Ring 52 des Mitschleppers 50 ist. Auf diese Weise sind das obere Ende des Mitschleppers 50 und die erste Seite der Anlagescheibe 42 nicht nur parallel sondern auch auf einer Höhe angeordnet, schließen also bündig miteinander ab. Dies ist notwendig, damit die Kontersicherung und die Transportsicherung einwandfrei funktionieren. Mittels der Quetschsegmente 54 wird ein Festsitz der Anlagescheibe 42 am ersten Ring 52 realisiert.

Lagerichtiges Anordnen des Mitschleppers 50 heißt in diesem Zusammenhang, dass am Ende des Einpressens, also wenn der erste Ring 52 bündig mit der Anlagescheibe 42 abschließt, der erste Vorsprung 58 des Mitschleppers 50 benachbart zum ersten Vorsprung 22 des Basiselement 10 und die zweiten Vorsprünge 62 in den Durchbrüchen 13 angeordnet sind. Der erste Vorsprung 58 des Mitschleppers 50 bildet mit dem ersten Vorsprung 22 des Basiselements 10 die Kontersicherung während die zweiten Vorsprünge 62 in den Durchbrüchen 13 die Transportsicherung gegen Drehen bilden.

Wird das obige Verfahren automatisch ausgeführt, insbesondere die Zufuhr des Mitschleppers 50, dann kann die lagerichtige Orientierung aufgrund des ersten 66 und des zweiten Führungselements 68 sichergestellt werden, die unterschiedliche lang sind und auf diese Weise ein um 180° verdrehtes Einbauen des Mitschleppers 50 verhindern können.

### 6. Bezugszeichenliste

- 1: Toleranzausgleichsanordnung
- 3: Basiseinheit
- 5: Verstelleinheit
- 7: Mitschleppereinheit
- 10: Basiselement
- 12: Bohrung
- 14: Freimachung
- 16: erste Öffnung
- 18: zweite Öffnung
- 20: Durchbruch
- 22: erster Vorsprung
- 24: verringerter Durchmesserbereich
- 30: erstes Metallelement
- 32: zweites Metallelement
- 40: Gewindehülse
- 42: Anlagescheibe
- 50: Mitschlepper
- 52: erster Ring
- 54: Quetschsegmente
- 56: zweiter Ring
- 58: erster Vorsprung
- 60: dritter Ring
- 62: zweiter Vorsprung
- 64: Schleppsteg
- 66: erstes Führungselement
- 68: zweites Führungselement

## Patentansprüche

1. Toleranzausgleichsanordnung (1) zum Befestigen eines ersten Bauteils an einem zweiten Bauteil mit selbsttätigem Ausgleich von Toleranzen im Abstand zwischen dem ersten Bauteil und dem zweiten Bauteil, die die folgenden Merkmale aufweist:
a. ein Basiselement (10), das ein erstes Metallelement (30) mit einem ersten Innengewinde und ein zweites Metallelement (32) mit einem zweiten Innengewinde aufweist, und
b. eine Verstelleinheit (5), die eine Gewindehülse (40) aus Metall mit einem Außengewinde und eine zumindest teilweise in der Gewindehülse (40) angeordnete Mitschleppereinheit (7) umfasst, wobei das Außengewinde mit dem ersten Innengewinde des ersten Metallelements (30) des Basiselements (10) eine erste Gewindepaarung einer ersten Gangrichtung bildet, wobei
c. das erste Metallelement (30) und das zweite Metallelement (32) entlang einer Längsachse des Basiselements (10) voneinander beabstandet sind, während
d. eine Befestigungsschraube durch eine Öffnung einer Basiseinheit, die aus dem Basiselement (10), dem ersten (30) und dem zweiten Metallelement (32) gebildet ist, und der Verstelleinheit (5) einsetzbar ist, die über eine zweite Gewindepaarung einer der ersten entgegengesetzten zweiten Gangrichtung in das zweite Innengewinde des zweiten Metallelements (32) des Basiselements (10) einschraubbar ist und mit der Verstelleinheit (5) über die Mitschleppereinheit (7) durch eine lösbare Mitschleppverbindung verbindbar ist, um beim Eindrehen der Befestigungsschraube die Verstelleinheit (5) mitzudrehen und dadurch in Anlage mit dem ersten Bauteil zu bewegen, wobei
e. das erste Metallelement (30) schwimmend im Basiselement (10) angeordnet ist, sodass eine Fehlausrichtung der Befestigungsschraube beim Einsetzen in die Verstelleinheit (5) ausgleichbar ist.

2. Toleranzausgleichsanordnung (1) gemäß Patentanspruch 1, in der das Basiselement (10) das erste (30) und das zweite Metallelement (32) zumindest teilweise so umgibt, dass das erste (30) und das zweite Metallelement (32) im Basiselement (10) drehfest angeordnet sind, wobei das Basiselement (10) vorzugsweise aus Kunststoff besteht.

3. Toleranzausgleichsanordnung (1) gemäß einem der vorhergehenden Patentansprüche, in dem das Basiselement (10) ein erstes Ende mit einem ersten Innendurchmesser aufweist und ein entgegengesetztes zweites Ende mit einem zweiten Innendurchmesser, der kleiner ist als der erste Innendurchmesser, wobei das erste Metallelement (30) benachbart zum ersten Ende und das zweite Metallelement (32) benachbart zum zweiten Ende angeordnet ist.

4. Toleranzausgleichsanordnung (1) gemäß einem der vorhergehenden Patentansprüche, in dem das Basiselement (10) eine erste laterale Öffnung (16) für die Aufnahme des ersten Metallelements (30) und/oder eine zweite laterale Öffnung (18) für die Aufnahme des zweiten Metallelements (32) aufweist, wobei die erste (16) und die zweite laterale Öffnung (18) vorzugsweise axial übereinander angeordnet sind, und/oder in der das erste (30) und das zweite Metallelement (32) eine erste und eine zweite Mutter sind.

5. Toleranzausgleichsanordnung (1) gemäß einem der vorhergehenden Patentansprüche, in der die Mitschleppereinheit (7) einen Mitschlepper (50), vorzugsweise aus Kunststoff, sowie eine Anlagescheibe (42) umfasst, vorzugsweise aus Metall, wobei der Mitschlepper (50) mittels Presssitz in der Gewindehülse (40) gehalten ist.

6. Toleranzausgleichsanordnung (1) gemäß Patentanspruch 5, in der der Mitschlepper (50) ein erstes und ein zweites axiales Ende aufweist, wobei das erste axiale Ende bündig mit einer ersten Seite der Anlagescheibe (42) angeordnet ist und eine zweite der ersten Seite gegenüberliegende Seite der Anlagescheibe (42) liegt an der Gewindehülse (40) an.

7. Toleranzausgleichsanordnung (1) gemäß Patentanspruch 6, in der der Mitschlepper (50) einen ersten radial nach außen ragenden Vorsprung (58) benachbart dem zweiten axialen Ende aufweist und das Basiselement (10) weist einen ersten radial nach innen ragenden Vorsprung (22) auf, die gemeinsam eine Kontersicherung bilden.

8. Toleranzausgleichsanordnung (1) gemäß einem der Patentansprüche 5 bis 7, in der der Mitschlepper (50) mindestens einen zweiten radial nach außen ragenden Vorsprung (62) benachbart dem zweiten axialen Ende aufweist und das Basiselement (10) weist mindestens einen Durchbruch (20) auf, die gemeinsam eine Transportsicherung bilden, insbesondere gegen Drehen, und/oder in der der Mitschlepper (50) mindestens ein erstes Führungselement (66) aufweist mit dem ein lagerichtiges Anordnen des Mitschleppers (50) in der Verstelleinheit (5) und somit auch im Basiselement (10) realisierbar ist.

9. Ein erstes Bauteil in Kombination mit einer Toleranzausgleichsanordnung (1) gemäß einem der vorhergehenden Patentansprüche, wobei die Toleranzausgleichsanordnung (1) in das erste Bauteil eingeschraubt ist.

10. Ein erstes und ein zweites Bauteil, die über die Toleranzausgleichsanordnung (1) gemäß einem der Patentansprüche 1 bis 8 und mittels einer Befestigungsschraube aneinander befestigt sind.

11. Herstellungsverfahren einer Toleranzausgleichsanordnung (1) gemäß einem der Patentansprüche 1 bis 8, **gekennzeichnet durch** die folgenden Schritte:
a. Bereitstellen eines Basiselements (10), das ein erstes Metallelement (30) mit einem ersten Innengewinde und ein zweites Metallelement (32) mit einem zweiten Innengewinde aufweist,
b. Bereitstellen einer Verstelleinheit (5), die eine Gewindehülse (40) aus Metall mit einem Außengewinde und eine Mitschleppereinheit (7) umfasst, danach
c. Einschrauben der Gewindehülse (40) in das erste Metallelement (30), wobei das Außengewinde mit dem ersten Innengewinde des ersten Metallelements (30) des Basiselements (10) eine erste Gewindepaarung einer ersten Gangrichtung bildet.

12. Herstellungsverfahren gemäß Patentanspruch 11, wobei der Schritt des Bereitstellens des Basiselements (10) umfasst:
d. Anordnen des ersten Metallelements (30) benachbart zu einem ersten Ende des Basiselements (10), vorzugsweise mittels Einführen des ersten Metallelements (30) in das Basiselement (10) über eine erste laterale Öffnung (16) des Basiselements (10).

13. Herstellungsverfahren gemäß einem der vorhergehenden Patentansprüche 11 oder 12, wobei der Schritt des Bereitstellens der Verstelleinheit (5) umfasst:
e. Bereitstellen der Gewindehülse (40) und einer Mitschleppereinheit (7) umfassend eine Anlagescheibe (42), vorzugsweise aus Metall, und eines Mitschleppers (50), vorzugsweise aus Kunststoff.

14. Herstellungsverfahren gemäß einem der vorhergehenden Patentansprüche 11 bis 13, mit dem weiteren Schritt:
f. Einpressen des Mitschleppers (50) in die in das erste Metallelement (30) eingeschraubte Gewindehülse (40), so dass eine Anlagescheibe (42) mit einer ersten Seite bündig mit einem ersten Ende des Mitschleppers (50) abschließt und mit einer der ersten Seite entgegengesetzten zweiten Seite an der Gewindehülse (40) anliegt.

15. Herstellungsverfahren gemäß einem der vorhergehenden Patentansprüche 11 bis 14, wobei der Mitschlepper (50) einen ersten radial nach außen ragenden Vorsprung (58) aufweist, der nach dem Einpressen des Mitschleppers (50) benachbart zu einem radial nach innen ragenden Vorsprung (22) des Basiselements (10) angeordnet ist, so dass eine Kontersicherung gebildet ist, und/oder wobei der Mitschlepper (50) mindestens einen zweiten radial nach außen ragenden Vorsprung (62) aufweist, der nach dem Einpressen des Mitschleppers (50) in einem Durchbruch (20) des Basiselements (10) angeordnet ist, so dass eine Transportsicherung gebildet ist.

## Claims

1. Tolerance compensation arrangement (1) for fastening a first component to a second component with automatic compensation of tolerances in the spacing between the first and the second component, comprising the following features:
a. a base element (10) which comprises a first metal element (30) with a first inner thread and a second metal element (32) with a second inner thread and
b. an adjustment unit (5) which comprises a threaded sleeve (40) made of metal with an outer thread and a dragging unit (7) at least partially arranged in the threaded sleeve (40), wherein the outer thread forms a first thread pairing of a first thread direction with the first inner thread of the first metal element (30) of the base element (10), wherein
c. the first metal element (30) and the second metal element (32) are arranged along a longitudinal axis of the base element (10) at a distance to one another, while
d. a fastening screw is insertable through an opening of a base unit, which is formed of the base element (10), the first (30) and the second metal element (32), and the adjustment unit (5), is screwable into the second inner thread of the second metal element (32) of the base element (10) via a second thread pairing of a second thread direction opposite to the first thread direction and is connectable with the adjustment unit (5) via the dragging unit (7) through a releasable dragging connection so as to co-rotate, during the rotation of the fastening screw, the adjustment unit (5) and thereby move it into abutment with the first component, wherein
e. the first metal element (30) is floatingly arranged in the base element (10), so that a misalignment of the fastening screw is compensable during insertion into the adjustment unit (5).

2. Tolerance compensation arrangement (1) according to claim 1, in which the base element (10) at least partially surrounds the first (30) and the second metal element (32) so that the first (30) and the second metal element (32) are arranged rotationally fixed in the base element (10), wherein the base element (10) preferably consists of plastic.

3. Tolerance compensation arrangement (1) according to one of the preceding claims, in which the base element (10) comprises a first end with a first inner diameter and an opposite second end with a second inner diameter being smaller than the first inner diameter, wherein the first metal element (30) is arranged adjacent to the first end and the second metal element (32) is arranged adjacent to the second end.

4. Tolerance compensation arrangement (1) according to one of the preceding claims, in which the base element (10) comprises a first lateral opening (16) for receiving the first metal element (30) and/or a second lateral opening (18) for receiving the second metal element (32), wherein the first (16) and the second lateral opening (18) are preferably arranged axially above one another, and/or in which the first (30) and the second metal element (32) are a first and a second nut.

5. Tolerance compensation arrangement (1) according to one of the preceding claims, in which the dragging unit (7) comprises a dragging element (50), preferably made of plastic, as well as an abutting disc (42), preferably made of metal, wherein the dragging element (50) is retained in the threaded sleeve (40) by means of a press-fit.

6. Tolerance compensation arrangement (1) according to claim 5, in which the dragging element (50) comprises a first and a second axial end, wherein the first axial end is arranged flush with a first side of the abutting disc (42) and a second side of the abutting disc (42) opposite to the first side abuts with the threaded sleeve (40).

7. Tolerance compensation arrangement (1) according to claim 6, in which the dragging element (50) comprises a first radially outwardly protruding protrusion (58) adjacent to the second axial end and the base element (10) comprises a first radially inwardly protruding protrusion (22), which together form a counter-locking.

8. Tolerance compensation arrangement (1) according to one of the claims 5 to 7, in which the dragging element (50) comprises at least a second radially outwardly protruding protrusion (62) adjacent to the second axial end and the base element (10) comprises at least one aperture (20), which together form a transport locking, especially against rotation and/or in which the dragging element (50) comprises at least one first guiding element (66), with which a correctly positioned arrangement of the dragging element (50) in the adjustment unit (5) and thus also in the base element (10) is realizable.

9. A first component in combination with a tolerance compensation arrangement (1) according to one of the preceding claims, wherein the tolerance compensation arrangement (1) is screwed into the first component.

10. A first and a second component, which are fastened to each other via the tolerance compensation arrangement (1) according to one of the claims 1 to 8 and by means of a fastening screw.

11. Manufacturing method for a tolerance compensation arrangement (1) according to one of the claims 1 to 8, **characterized by** the following steps:
a. providing a base element (10), which comprises a first metal element (30) with a first inner thread and a second metal element (32) with a second inner thread,
b. providing an adjustment unit (5), which comprises a threaded sleeve (40) made of metal with an outer thread and a dragging unit (7), then
c. screwing the threaded sleeve (40) into the first metal element (30), wherein the outer thread forms a first thread pairing of a first thread direction with the first inner thread of the first metal element (30) of the base element (10).

12. Manufacturing method according to claim 11, wherein the step of providing the base element (10) comprises:
d. arranging the first metal element (30) adjacent to a first end of the base element (10), preferably by means of inserting the first metal element (30) into the base element (10) via a first lateral opening (16) of the base element (10).

13. Manufacturing method according to one of the preceding claims 11 or 12, wherein the step of providing the adjustment unit (5) comprises:
e. providing the threaded sleeve (40) and a dragging unit (7) comprising an abutting disc (42), preferably made of metal, and a dragging element (50), preferably made of plastic.

14. Manufacturing method according to one of the preceding claims 11 to 13, with the further step:
f. pressing the dragging element (50) into the threaded sleeve (40) which is screwed into the first metal element (30), so that an abutting disc (42) with a first side is flush with a first end of the dragging element (50) and with a second side opposite to the first side, it is in contact with the threaded sleeve (40).

15. Manufacturing method according to one of the preceding claims 11 to 14, wherein the dragging element (50) comprises a first radially outwardly protruding protrusion (58) which, after the pressing-in of the dragging element (50), is arranged adjacent to a radially inwardly protruding protrusion (22) of the base element (10), so that a counter-locking is formed and/or wherein the dragging element (50) comprises at least a second radially outwardly protruding protrusion (62) which is arranged in an aperture (20) of the base element (10) after the pressing-in of the dragging element (50) so that a transport locking is formed.

## Revendications

1. Ensemble de compensation de tolérances (1) destiné à la fixation d'un premier composant à un deuxième composant avec compensation automatique de tolérances dans l'espacement entre le premier composant et le deuxième composant, présentant les caractéristiques suivantes :
a. un élément de base (10) présentant un premier élément métallique (30) doté d'un premier filetage intérieur et un deuxième élément métallique (32) doté d'un deuxième filetage intérieur, et
b. une unité de réglage (5) comportant une douille filetée (40) en métal dotée d'un filetage extérieur et une unité d'entraînement (7) disposée au moins partiellement dans la douille filetée (40), dans lequel le filetage extérieur forme une première paire de filetages présentant un premier sens de pas avec le premier filetage intérieur du premier élément métallique (30) de l'élément de base (10), dans lequel
c. le premier élément métallique (30) et le deuxième élément métallique (32) sont espacés l'un de l'autre le long d'un axe longitudinal de l'élément de base (10), tandis que
d. une vis de fixation peut être insérée à travers une ouverture d'une unité de base formée par l'élément de base (10), le premier (30) et le deuxième élément métallique (32), et de l'unité de réglage (5), laquelle peut être vissée dans le deuxième filetage intérieur du deuxième élément métallique (32) de l'élément de base (10) par le biais d'une deuxième paire de filetages présentant un deuxième sens de pas opposé au premier et laquelle peut être reliée à l'unité de réglage (5) par le biais de l'unité d'entraînement (7) à l'aide d'une liaison d'entraînement amovible, afin de faire tourner l'unité de réglage (5) lors de l'insertion par vissage de la vis de fixation et de la déplacer ainsi en contact avec le premier composant, dans lequel
e. le premier élément métallique (30) est disposé de façon flottante dans l'élément de base (10), de manière à pouvoir compenser un défaut d'alignement de la vis de fixation lors de l'insertion dans l'unité de réglage (5).

2. Ensemble de compensation de tolérances (1) selon la revendication 1, dans lequel l'élément de base (10) entoure au moins partiellement le premier (30) et le deuxième élément métallique (32), de telle façon que le premier (30) et le deuxième élément métallique (32) sont disposés de manière solidaire en rotation dans l'élément de base (10), l'élément de base (10) étant de préférence constitué de plastique.

3. Ensemble de compensation de tolérances (1) selon l'une des revendications précédentes, dans lequel l'élément de base (10) présente une première extrémité avec un premier diamètre intérieur et une deuxième extrémité opposée avec un deuxième diamètre intérieur, lequel est inférieur au premier diamètre intérieur, dans lequel le premier élément métallique (30) est disposé de façon adjacente à la première extrémité et le deuxième élément métallique (32) est disposé de façon adjacente à la deuxième extrémité.

4. Ensemble de compensation de tolérances (1) selon l'une des revendications précédentes, dans lequel l'élément de base (10) présente une première ouverture latérale (16) destinée à la réception du premier élément métallique (30) et/ou une deuxième ouverture latérale (18) destinée à la réception du deuxième élément métallique (32), dans lequel la première (16) et la deuxième ouverture latérale (18) sont disposées de préférence de façon superposée axialement, et/ou dans lequel le premier (30) et le deuxième élément métallique (32) sont un premier et un deuxième écrou.

5. Ensemble de compensation de tolérances (1) selon l'une des revendications précédentes, dans lequel l'unité d'entraînement (7) comporte un entraînement (50), de préférence en plastique, ainsi qu'une rondelle de contact (42), de préférence en métal, dans lequel l'entraînement (50) est maintenu dans la douille filetée (40) au moyen d'un ajustement serré.

6. Ensemble de compensation de tolérances (1) selon la revendication 5, dans lequel l' entraînement (50) présente une première et une deuxième extrémité axiale, dans lequel la première extrémité axiale est disposée en affleurement avec un premier côté de la rondelle de contact (42) et un deuxième côté de la rondelle de contact (42) opposé au premier côté s'applique sur la douille filetée (40).

7. Ensemble de compensation de tolérances (1) selon la revendication 6, dans lequel l'entraînement (50) présente une première saillie (58) faisant saillie radialement vers l'extérieur, adjacente à la deuxième extrémité axiale, et l'élément de base (10) présente une première saillie (22) faisant saillie radialement vers l'intérieur, lesquelles forment conjointement un élément de contre-blocage.

8. Ensemble de compensation de tolérances (1) selon l'une des revendications 5 à 7, dans lequel l'entraînement (50) présente au moins une deuxième saillie (62) faisant saillie radialement vers l'extérieur, adjacente à la deuxième extrémité axiale, et l'élément de base (10) présente au moins une percée (20), lesquelles forment conjointement un élément de blocage pour le transport, en particulier contre la rotation, et/ou dans lequel l'entraînement (50) présente au moins un premier élément de guidage (66) permettant de réaliser un agencement en position correcte de l'entraînement (50) dans l'unité de réglage (5) et donc également dans l'élément de base (10).

9. Premier composant en combinaison avec un ensemble de compensation de tolérances (1) selon l'une des revendications précédentes, dans lequel l'ensemble de compensation de tolérances (1) est vissé dans le premier composant.

10. Premier et deuxième composant, lesquels sont fixés l'un à l'autre par le biais de l'ensemble de compensation de tolérances (1) selon l'une des revendications 1 à 8 et au moyen d'une vis de fixation.

11. Procédé de fabrication d'un ensemble de compensation de tolérances (1) selon l'une des revendications 1 à 8, **caractérisé par** les étapes suivantes :
a. mise à disposition d'un élément de base (10) présentant un premier élément métallique (30) doté d'un premier filetage intérieur et un deuxième élément métallique (32) doté d'un deuxième filetage intérieur,
b. mise à disposition d'une unité de réglage (5) comportant une douille filetée (40) en métal dotée d'un filetage extérieur ainsi qu'une unité d'entraînement (7), puis
c. vissage de la douille filetée (40) dans le premier élément métallique (30), le filetage extérieur formant une première paire de filetages présentant un premier sens de pas avec le premier filetage intérieur du premier élément métallique (30) de l'élément de base (10).

12. Procédé de fabrication selon la revendication 11, dans lequel l'étape de mise à disposition de l'élément de base (10) comporte :
d. l'agencement du premier élément métallique (30) de façon adjacente à une première extrémité de l'élément de base (10), de préférence par insertion du premier élément métallique (30) dans l'élément de base (10) par le biais d'une première ouverture latérale (16) de l'élément de base (10).

13. Procédé de fabrication selon l'une des revendications précédentes 11 ou 12, dans lequel l'étape de mise à disposition de l'unité de réglage (5) comporte :
e. la mise à disposition de la douille filetée (40) et d'une unité d'entraînement (7) comportant une rondelle de contact (42), de préférence en métal, et d'un entraînement (50), de préférence en plastique.

14. Procédé de fabrication selon l'une des revendications précédentes 11 à 13, comprenant l'étape supplémentaire suivante :
f. enfoncement de l'entraînement (50) dans la douille filetée (40) vissée dans le premier élément métallique (30), de telle façon qu'une rondelle de contact (42) se termine avec un premier côté en affleurement avec une première extrémité de l'entraînement (50) et s'applique sur la douille filetée (40) avec un deuxième côté opposé au premier côté.

15. Procédé de fabrication selon l'une des revendications précédentes 11 à 14, dans lequel l'entraînement (50) présente une première saillie (58) faisant saillie radialement vers l'extérieur, laquelle est adjacente à une saillie (22) de l'élément de base (10) faisant saillie radialement vers l'intérieur après l'enfoncement de l'entraînement (50), de manière à former un élément de contre-blocage, et/ou dans lequel l'entraînement (50) présente au moins une deuxième saillie (62) faisant saillie radialement vers l'extérieur, laquelle est disposée dans une percée (20) de l'élément de base (10) après l'enfoncement de l'entraînement (50), de manière à former un élément de blocage pour le transport.
